**Europäisches Patentamt**

**European Patent Office**

**Office européen des brevets**

(11) Veröffentlichungsnummer: **0 154 813**
**A1**

# EUROPÄISCHE PATENTANMELDUNG

(21) Anmeldenummer: **85101394.6**

(22) Anmeldetag: **09.02.85**

(51) Int. Cl.⁴: **B 23 Q 3/02**

(30) Priorität: **27.02.84 DE 3407003**

(43) Veröffentlichungstag der Anmeldung: **18.09.85**
**Patentblatt 85/38**

(84) Benannte Vertragsstaaten: **AT BE CH DE FR GB IT LI NL SE**

(71) Anmelder: **Horst Witte Entwicklungs- und Vertriebs-KG, D-2122 Bleckede (DE)**

(72) Erfinder: **Witte, Horst, D-2122 Bleckede (DE)**

(74) Vertreter: **von Raffay, Vincenz, Dipl.-Ing. et al, Patentanwälte Raffay, Fleck & Partner Postfach 32 32 17, D-2000 Hamburg 13 (DE)**

(54) **Spannvorrichtung für Werkzeugmaschinen.**

(57) Die erfindungsgemäße Spannvorrichtung ist mit sich wiederholenden schwalbenschwanzförmigen Führungen 3, 4 zwischen den einzelnen Aufbauteilen versehen, so daß das Werkstück praktisch auf jeden erwünschten Punkt stufenlos eingestellt werden kann. Ein bestimmtes Rastermaß zwischen den einzelnen Nuten bzw. Schienen der schwalbenschwanzförmigen Führung ermöglicht nicht nur ein leichtes Zusammenbauen, sondern auch ein Verschieben senkrecht zu Schienen und Nuten, um einen entsprechenden Bruchteil des Rastermaßes. Die Verbindung der einzelnen Aufbauteile untereinander erfolgt mit Hilfe von Klemmleisten 5, die in die freibleibenden Nutenabschnitte einsteckbar und dort fest spannbar sind. Die einzelnen Teile können in herkömmlicher Weise sehr unterschiedlich gestaltet sein. Es kann sich um Grundplatten, Zwischenplatten, Winkel und Blöcke sowie Einzeladapter handeln. Gemeinsam ist diesen Teilen, daß sie an den Flächen, an denen sie miteinander verbunden werden sollen, die Schwalbenschwanzführungen mit dem vorherbestimmten Abstandsmaß aufweisen. Hierdurch wird der Raster festgelegt. Die Nuten und Schienen einer Fläche können senkrecht zu den Nuten und Schienen der anderen Fläche eines Aufbauteils verlaufen, um somit eine Verschiebung ohne Sprünge in alle Richtungen zu ermöglichen.

0154813

Die Erfindung betrifft eine Spannvorrichtung nach dem Oberbegriff des Anspruches 1.

Bei einer bekannten Spannvorrichtung der eingangs genannten Art werden die Führungen durch Nuten und Schienen mit rechteckigem Querschnitt gebildet. Die Breite von Nut und zugehöriger Schiene ist so gewählt, daß diese stramm ineinander passen. Verbunden werden die beiden Teile mit Hilfe von Schrauben. Die Bohrungen und Gewindebohrungen für die Schrauben weisen einen bestimmten Abstand auf, durch den ein Raster und damit die "Sprünge" festgestellt sind, durch die die einzelnen Teile gegeneinander versetzbar sind. Mit dieser bekannten Spannvorrichtung ist es nicht möglich,einzelne Punkte zwischen dem festgelegten Raster einzustellen. (DE-OS 24 08 350)

Weiterhin ist eine Spannvorrichtung einfacher Bauart in Form eines Schraubstockes bekannt, der auf einer Grundplatte seitlich dadurch verschiebbar ist, daß eine Schwalbenschwanzführung zwischen Schraubstock und Grundplatte ausgebildet ist. Die Schiene der Schwalbenschwanzführung ist so breit wie die Nut, so daß ein Einstecken oder Zusammenbau nur seitlich und nicht von oben möglich ist. Eine Verschiebung senkrecht zum Verlauf von Schiene und Nut ist nicht möglich (DE-GM 82 15 263).

Der Erfindung liegt die Aufgabe zugrunde, eine Spannvorrichtung der eingangs genannten Art zu schaffen, durch die praktisch jeder Punkt im Raum angesteuert werden kann und die Schraubenverbindungen mit den dazugehörigen Bohrungen vermieden werden.

Diese Aufgabe wird grundsätzlich durch das Kennzeichen des Anspruches 1 gelöst. In Anspruch 2 ist eine Ausführungsform unter Schutz gestellt, die sich für die Praxis besonders eignet.

Erfindungsgemäß werden die einzelnen Teile - es können auch, wie allgemein bekannt, mehr als zwei sein - nicht durch Schrauben, Stifte oder dergleichen verbunden, sondern durch Schwalbenschwanzführungen. Hierdurch ist in Richtung der Schienen eine Einstellung ohne Sprünge möglich. Wenn mehr als zwei Teile verwendet werden, so können die Schienen auf der einen Fläche senkrecht zu den Schienen auf der anderen

Fläche verlaufen, so daß dann bereits jeder Punkt ohne Sprünge angesteuert werden kann. Wenn das dritte Teil beispielsweise ein Winkel ist, und die Schienen auf der einen Fläche des Winkels senkrecht zu den Schienen auf der anderen Fläche verlaufen, so ist jeder Punkt im Raum ohne "Sprung" erreichbar.

Die einzelnen Spannteile lassen sich beispielsweise aus Aluminium als "Meterware" herstellen und somit dem jeweiligen Verwendungszweck leicht anpassen. Die Montage und Demontage kann sehr schnell erfolgen.

Weitere vorteilhafte Ausgestaltungen sind Gegenstand der Ansprüche 3 bis 8.

Im folgenden wird die Erfindung unter Hinweis auf die Zeichnung anhand verschiedener Ausführungsbeispiele näher erläutert.

Es zeigt:

Fig. 1   eine perspektivische Ansicht einer Ausführungsform einer Spannvorrichtung nach der Erfindung;

Fig. 2   eine schematische Seitenansicht zur Veranschaulichung der Schwalbenschwanzführung zur Verbindung von zwei Teilen nach dem erfindungsgemäßen Prinzip;

Fig. 3   einen Schnitt durch eine Ausführungsform einer Klemmleiste im vergrößerten Maßstab;

Fig. 4   eine Ansicht eines Adapters zum Aufbau eines Grundteils;

Fig. 5   eine Seitenansicht einer anderen Ausführungsform einer Spannvorrichtung nach der Erfindung; und

Fig. 6   eine Draufsicht auf noch eine andere Ausführungsform.

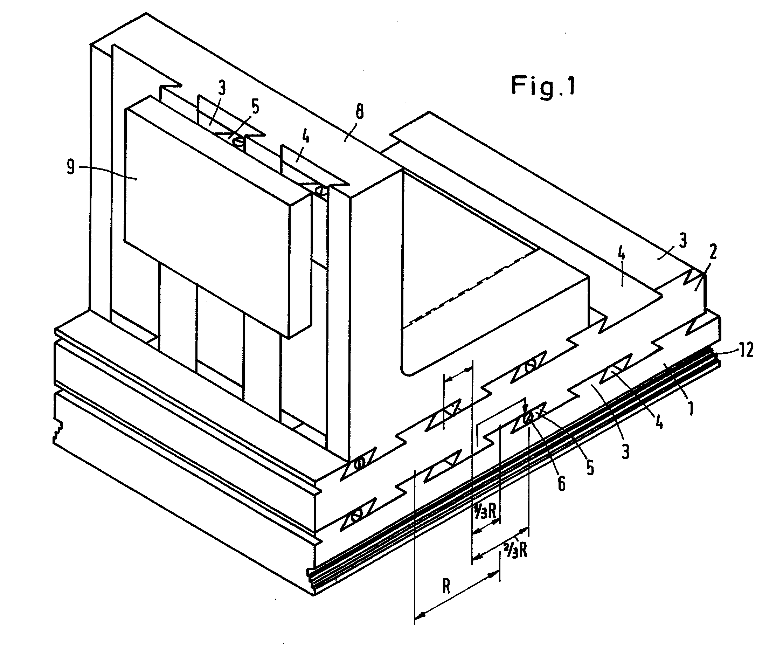

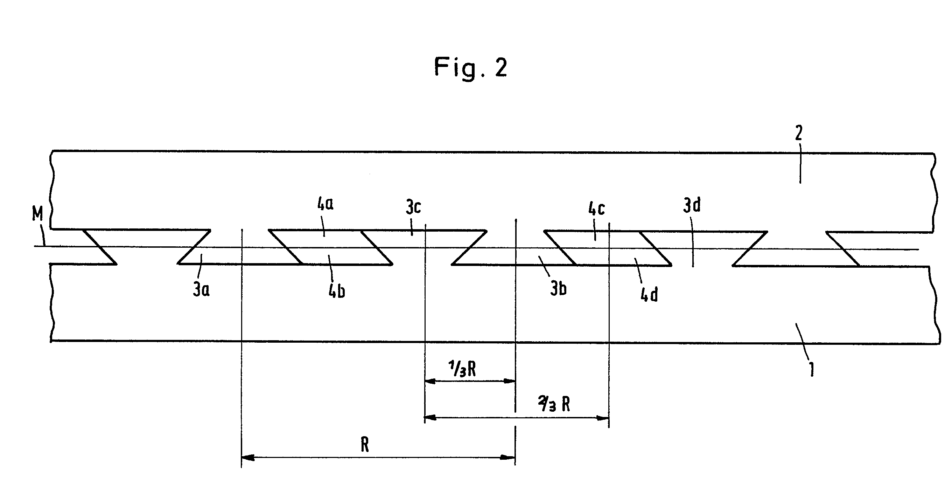

Die in der Zeichnung, insbesondere in den Fig. 1 und 2 dargestellte Spannvorrichtung besteht aus mindestens zwei Teilen, beispielsweise einer Grundplatte 1 und einem Zwischenteil 2. Mit Hilfe dieser beiden Teile 1 und 2 soll insbesondere unter Hinweis auf Fig. 2 das Prinzip der Erfindung beschrieben werden.

Die beiden einander gegenüberliegenden Flächen der Teile 1 und 2 sind mit einander identischen Schwalbenschwanzführungen versehen, die durch Nuten 4 und Schienen 3 gebildet werden. Die Winkel der schräg verlaufenden Kanten sind gleich. Die Breite der Nuten 3 ist ebenfalls immer gleich, ebenso wie die Breite der Schienen. Die Nuten sind immer so breit, daß die Schienen von oben in sie hineingesteckt werden können, so daß die Verbindung von zwei Teilen leicht vorgenommen werden kann. Der von der Schiene 3 freigelassene Raum der entsprechenden Nut 4 wird bei mindestens einer, in der Praxis vorzugsweise bei zwei voneinander entfernt liegenden Nuten durch eine Klemmleiste ausgefüllt, um die beiden Teile nach erfolgter Einstellung fest und unverrückbar miteinander zu verbinden.

Beim Betrachten der Fig. 1 und 2 wird deutlich, daß das Teil 1 in Längsrichtung von Nuten 4 und Schienen 3 beliebig im Verhältnis zum Teil 2 einstellbar ist. Die entsprechend beliebige Einstellung in die andere Richtung wird dadurch ermöglicht, daß Nuten und Schienen zwischen dem Teil 2 und dem nächsten mit ihnen verbundenen Teil gegebenenfalls senkrecht zu Nuten und Schienen auf der anderen Seite verlaufen.

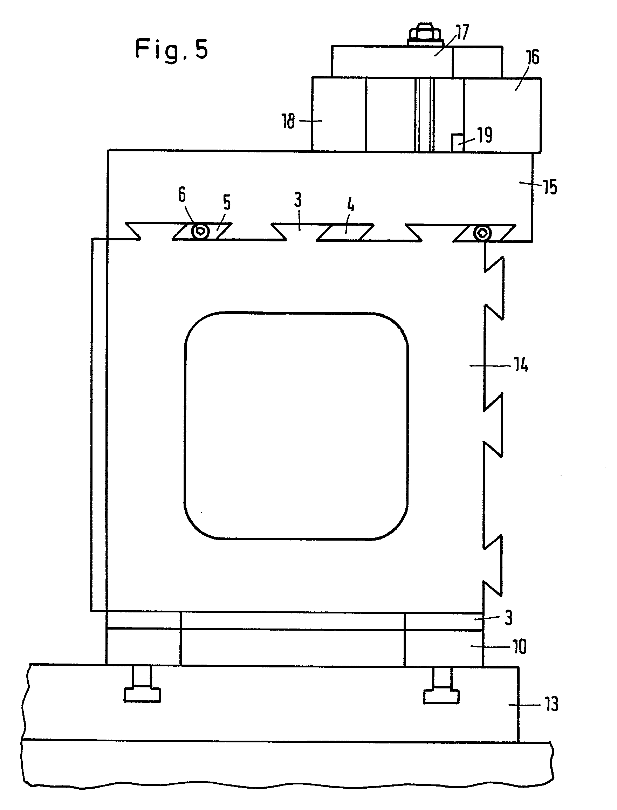

Weiterhin wird beim Betrachten der Fig. 1 und 2 deutlich, daß die Teile 1 und 2 nicht nur in Längsrichtung von Nuten und Schienen gegeneinander verschiebbar sind, sondern auch in Querrichtung, und zwar um das Maß, um das die Nut breiter ist als die Schiene. Hieraus ergibt sich, wie insbesondere beim Betrachten der Fig. 1 deutlich wird, daß, wenn die Schienen einen Abstand R voneinander aufweisen, eine Verschiebung bei nur zwei Teilen senkrecht zur Längsrichtung von Nut und Schiene um zwei Drittel möglich ist. Wenn drei Teile verwendet werden, verkürzt sich diese Verschiebemöglichkeit auf ein Drittel R. Selbst wenn, wie es in Fig. 1 dargestellt ist, die Schienen und Nuten auf beiden Seiten des Teils 2 parallel zueinander verlaufen, ist in senkrechter Richtung zu dem Verlauf von Nuten und Schienen eine Einstellung mit einem verhältnismäßig kurzen "Sprung" möglich. Dieser Sprung läßt sich dann ganz vermeiden, wenn die entsprechenden Nuten und Schienen auf den einander gegenüberliegenden Flächen senkrecht zueinander verlaufen. Dieses ist beispielsweise bei der Ausführungsform nach Fig. 5 der Fall.

Bei einer vorteilhaften Ausführungsform ist die Nut auf der Höhenmitte M (Fig. 2) genau doppelt so breit wie die Höhenmitte der Schiene. Eine derartige Ausführungsform hat sich in der praktischen Erprobung bewährt.

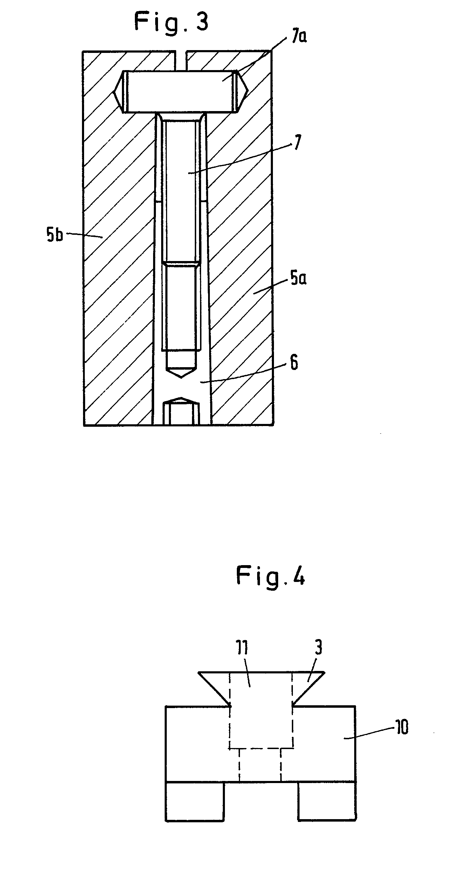

In Fig. 3 ist eine Klemmleiste 5 dargestellt, die aus zwei Teilen 5a und 5b besteht. Zwischen diesen beiden Teilen liegt eine Knebelschraube 7, deren Knebel 7a die beiden Teile zusammenhält und insbesondere eine Verschiebung in Längsrichtung gegeneinander verhindert. Eine konisch ausgebildete Spreizmutter ist mit 6 bezeichnet. Diese Klemmleiste ist in ihrer Querschnittsform parallelogrammförmig, d.h. der Form des freibleibenden Querschnitts der Nut angepaßt. Sie wird nach Verbindung und Einstellung der miteinander zu verbindenden Teile in den frei-

- 5 -

0154813

bleibenden Raum hineingesteckt und durch Anziehen der Spreizmutter 6 festgeklemmt. Bei diesem Anziehen können sich aufgrund des Knebels 7a die beiden Teile 5a und 5b nicht gegeneinander verschieben. In zweckmäßiger Weise werden zur Verbindung von jeweils zwei Teilen mindestens zwei derartige Klemmleisten eingesetzt, wie es beispielsweise in Fig. 1 zu erkennen ist.

In Fig. 4 ist ein Adapter dargestellt. Durch beispielsweise vier derartige Adapter 10 kann auf einem normalen Maschinentisch eine Grundplatte gebildet werden. Befestigt werden dieAdapter 10 durch Schrauben, die in die Bohrung 11 eingesteckt werden. Hierbei ist lediglich sicherzustellen, daß die Adapter 10 mit ihren verhältnismäßig kurzen Schienen 3 miteinander ausgerichtet sind,und daß die Schienen der nebeneinander liegenden Adapter einen Abstand aufweisen, der dem gewünschten Maß entspricht, d.h. das zwischen zwei parallelen Schienen ein Abstand vorliegt, der der einfachen oder mehrfachen Nutenbreite entspricht.

In Fig. 1 ist eine Ausführungsform dargestellt, die aus einer Grundplatte 1 besteht. Diese Grundplatte 1 ist mit Hilfe von Treppenstufen 12 in herkömmlicher Weise durch Spanneisen auf einem Maschinentisch zu befestigen. Zwischen einem Winkel 8 und der Grundplatte 1 ist eine Zwischenplatte 2 angeordnet. Nuten und Schienen 3 und 4 auf beiden Seiten der Zwischenplatte verlaufen parallel zueinander, so daß eine seitliche Verschiebung in Sprüngen um ein Drittel R möglich ist. Die Nuten 3 und 4 der senkrechten Fläche des Winkels verlaufen ebenfalls senkrecht. In diesen Nuten ist ein Werkstückträger oder Spannteil 9 befestigt und zwar mit Hilfe auf der Rückseite dieses Teils 9 in entsprechender Weise vorgesehenen Nuten und Federn.

Bei der Ausführungsform nach Fig. 5 sind auf dem Maschinentisch 13 vier Adapter 10 in der beschriebenen Weise angeordnet. Diese bilden praktisch die Grundplatte. Die Adapter 10 dienen der Befestigung eines Blockes 14 mit Nuten und Schienen, die an einander gegenüberliegenden Flächen senkrecht zueinander verlaufen, wie es beim Betrachten der Fig. 5 deutlich wird. Auf der Oberseite des Blockes 14 befindet sich ein Werkstückträger oder Spannteil 15, auf dem das Werkstück 16 mit Hilfe einer Spannpratze 17, eines Widerlagers 18 und eines Anlagestiftes 19 befestigt ist.

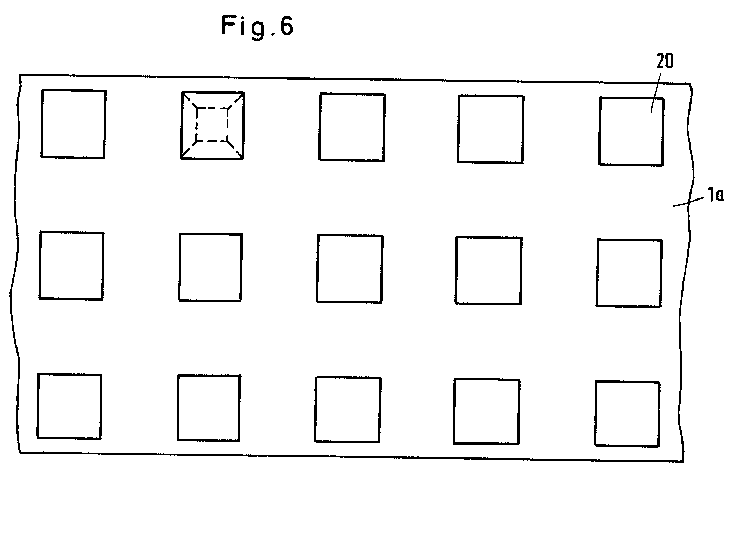

Mit Hilfe des erfindungsgemäßen Prinzips der in der beschriebenen Weise ausgebildeten Schwalbenschwanzführungen lassen sich die unterschiedlichsten Aufspannteile, wie sie für derartige Spannvorrichtungen bekannt sind, so miteinander verbinden und so gegeneinander verschieben, daß eine stufenlose Einstellung des Werkstückes möglich ist. Die einzelnen Aufbauteile lassen sich in vorteilhafter Weise preiswert und sehr genau aus Aluminium als Meterware herstellen. Somit ist eine Anpassung an das jeweilige Werkstück ohne Schwierigkeiten möglich. Die einzelnen Teile lassen sich "von oben" schnell miteinander verbinden und dann leicht durch Gegeneinanderverschieben einstellen. Die endgültige Arretierung mit Hilfe der Klemmleisten erfolgt ebenso schnell wie sicher. In Fig. 6 ist in Draufsicht eine andere Ausführungsform einer Grundplatte 1a dargestellt. Auf dieser Grundplatte sind die Schienen und Nuten jeweils unterbrochen, so daß sie praktisch kreuzweise verlaufen. Wie beim Betrachten der Fig. 6 deutlich wird, sind von den Schienen lediglich "Reste" 20 stehengeblieben, die bei der dargestellten Ausführungsform in Draufsicht quadratisch sind. Wie gestrichelt angedeutet, ist die Schwalbenschwanzform an allen vier Seiten des jeweiligen Schienenrestes vorgesehen. Bei dieser Ausführungsform ist eine Anordnung und Verschiebung von vornherein in zwei Richtungen möglich. Diese besondere Gestaltung, die eine Verschiebung zwischen zwei unmittelbar miteinander verbundenen Teilen in zwei Richtungen ermöglicht, kann auch an einem anderen Aufbauteil, nicht unbedingt an der Grundplatte vorgesehen sein. Damit die aneinander anliegenden tragenden Flächen immer ausreichend groß sind, wird ein Teil entsprechend der Ausführungsform nach Fig. 6 zweckmäßig mit einem Teil mit durchgehenden Schienen und Nuten zusammengebaut.

**RAFFAY, FLECK & PARTNER**

P A T E N T A N W Ä L T E
EUROPEAN PATENT ATTORNEYS

P O S T F A C H  32 32 17
D-2000 H A M B U R G  13

8. Februar 1985

DIPL.-ING.  VINCENZ v.  RAFFAY
DIPL.-CHEM.  DR.  THOMAS  FLECK
HAMBURG

DIPL.-CHEM.  DR.  HANS  D.  BOETERS
DIPL.-ING.  ROBERT  BAUER
MÜNCHEN

KANZLEI:
GEFFCKENSTRASSE 6
TELEFON: (040) 47 80 23
TELEGRAMME: PATFAY, HAMBURG
TELEX 2 164 631 paty d

UNSERE AKTE:  2462/18

Horst Witte

Entwicklungs- und Vertriebs KG

D-2122 Bleckede

Spannvorrichtung für Werkzeugmaschinen.

## Patentansprüche

1.     Spannvorrichtung für Werkzeugmaschinen, insbesondere Fräsmaschinen mit einem Grundteil (Grundplatte) und einem auf diesem in verschiedenen, untereinander ein Rastermaß aufweisenden Stellungen befestigbaren Spannteil für das Werkstück, wobei zwischen Grundteil und Spannteil Führungen vorgesehen sind, die durch einander abwechselnde Nuten und Schienen an mindestens den aneinander angrenzenden Flächen jedes Teils gebildet sind, dadurch gekennzeichnet, daß die die Führungen bildenden Nuten (4) und Schienen (3) in an sich bekannter Weise schwalbenschwanzförmig ausgebildet sind, daß die Nuten immer um ein gleiches Maß breiter als die Schienen auf der gleichen Ebene und die größte Schienenbreite kleiner ist als die kleinste Nutenbreite und

daß in mindestens einer Nut eine an der in dieser Nut liegenden Schiene anliegende Klemmleiste (5) eingeschoben ist, die von ihrer Stirnseite her verspannbar ist.

2. Spannvorrichtung nach Anspruch 1, dadurch gekennzeichnet, daß die Nuten (4) auf der durch ihre Höhenmitte (M) gehenden Ebene doppelt so breit sind wie die Schienen (3) auf dieser Ebene.

3. Spannvorrichtung nach Anspruch 1, dadurch gekennzeichnet, daß die Klemmleiste aus zwei Teilen (5a, 5b) besteht, die durch eine Knebelschraube (7, 7a) zusammengehalten werden, auf die eine Spreizmutter (6) aufgeschraubt ist.

4. Spannvorrichtung nach Anspruch 1, dadurch gekennzeichnet, daß zwischen Grundteil (1) und Spannteil ein Zwischenteil (2) befestigbar ist, bei dem die Nuten (4) und Schienen (3) der einen Fläche parallel zu denjenigen der anderen Fläche verlaufen.

5. Spannvorrichtung nach Anspruch 1, dadurch gekennzeichnet, daß zwischen Grundteil (1) und Spannteil mindestens ein weiteres Aufbauteil (4) befestigbar ist, bei dem die Nuten (4) und Schienen (3) der einen Fläche senkrecht zu denjenigen der anderen Fläche verlaufen.

6. Spannvorrichtung nach Anspruch 5, dadurch gekennzeichnet, daß das weitere Aufbauteil ein Winkel (8) ist, bei dem die Nuten (4) und Schienen (3) an den aneinander angrenzenden Flächen senkrecht zueinander verlaufen.

7. Vorrichtung nach Anspruch 1, dadurch gekennzeichnet, daß das Grundteil durch mehrere Adapter (10) mit Schienen (3) gebildet ist, die so befestigt sind, daß die zwischen den Nuten liegenden Abschnitte dem gewählten Maß entsprechen.

Fig.1

Fig. 2

### Fig. 3

### Fig. 4

0154813

Fig. 5

Fig.6

0154813

**Europäisches Patentamt**

**EUROPÄISCHER RECHERCHENBERICHT**

| | **EINSCHLÄGIGE DOKUMENTE** | | EP 85101394.6 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | AT - B - 175 439 (DECKEL) <br> * Gesamt * <br> -- | 1 | B 23 Q  3/02 |
| A | DE - B2 - 2 408 350 (MAUSER) <br> * Fig. 1-8 * <br> -- | 1 | |
| A | DE - A1 - 2 623 143 (MAUSER) <br> * Fig. 1-5 * <br> -- | 1 | |
| A | DE - A - 1 602 917 (MC-KENZIE) <br> * Fig. 1-3c * <br> ---- | 1,3 | |

| RECHERCHIERTE SACHGEBIETE (Int. Cl.4) |
|---|
| B 23 C  1/00 |
| B 23 C  3/00 |
| B 23 Q  1/00 |
| B 23 Q  3/00 |
| B 23 B  5/00 |
| B 23 B  7/00 |
| B 23 B 11/00 |
| B 23 B 21/00 |
| B 23 P 23/00 |

Der vorliegende Recherchenbericht wurde für alle Patentansprüche erstellt.

| Recherchenort | Abschlußdatum der Recherche | Prüfer |
|---|---|---|
| WIEN | 11-06-1985 | FUCHS |

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82